(19) **Europäisches Patentamt**
**European Patent Office**
**Office européen des brevets**

(11) **EP 2 669 589 B1**

(12) **EUROPEAN PATENT SPECIFICATION**

(45) Date of publication and mention
of the grant of the patent:
**20.11.2019 Bulletin 2019/47**

(51) Int Cl.:
*G05D 23/19* *(2006.01)*   *F24F 11/30* *(2018.01)*
*F24F 11/62* *(2018.01)*   *F24F 110/10* *(2018.01)*

(21) Application number: **11857161.1**

(22) Date of filing: **25.01.2011**

(86) International application number:
**PCT/JP2011/051358**

(87) International publication number:
**WO 2012/101762 (02.08.2012 Gazette 2012/31)**

(54) **CONTROL DEVICE, CONTROL METHOD, AND PROGRAM**

STEUERVORRICHTUNG, STEUERVERFAHREN UND PROGRAMM DAFÜR

DISPOSITIF DE COMMANDE, PROCÉDÉ DE COMMANDE ET PROGRAMME ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.12.2013 Bulletin 2013/49**

(73) Proprietor: **Mitsubishi Electric Corporation
Tokyo 100-8310 (JP)**

(72) Inventor: **ISHIZAKA Taichi
Tokyo 100-8310 (JP)**

(74) Representative: **Pfenning, Meinig & Partner mbB
Patent- und Rechtsanwälte
Theresienhöhe 11a
80339 München (DE)**

(56) References cited:
JP-A- 63 183 333     JP-A- 2005 134 021
JP-A- 2006 105 487     JP-A- 2006 105 487
JP-A- 2007 040 584     JP-A- 2007 107 782
JP-A- 2007 107 782     JP-A- 2008 116 061
JP-A- 2008 116 062     JP-A- 2009 085 550

EP 2 669 589 B1

**Description**

Technical Field

The present invention relates to a control device, a control method and a program for controlling a plurality of air-conditioning devices that are installed at different locations in a living space in a home, a building or the like.

Background Art

With an air-conditioning device that is located in a building, the room temperature is typically controlled based on the temperature that is detected by a temperature sensor that is installed near an air intake, or a temperature sensor inside a remote control that is located on a wall and used for operating the air-conditioning device.

In this case, when the location where an occupant is actually located is distant from the installation location of the temperature sensor, the temperature of the location where the occupant is located sometimes does not obtain the set temperature. Particularly, when there are many heat-generating objects such as a personal computer and the like in the location where the occupant is located, it is believed that the temperature of the location where the occupant is located may not drop to the set temperature, resulting in a decrease in comfort.

Due to this kind of situation, air-conditioning systems have been disclosed in which temperature sensors are installed in a plurality of locations in a living space such as near a desk or a telephone to measure the temperature, and comfortable air-conditioning control is performed after accurately obtaining the temperature distribution in the a living space (for example, refer to Patent Literature 1). JP2006105487A provides an air conditioning system capable of providing power saving property and comfortableness. The air conditioning system including a plurality of indoor units for cooling or heating arranged within an indoor space comprises a transmitter having a power source, a controller, a temperature detector, a radio communication instrument and an antenna, and wirelessly transmitting an atmospheric air temperature; and a plurality of receivers set within the indoor space to receive a signal transmitted from the transmitter. The position of the transmitter is calculated by the plurality of receivers, and the operation units are operation-controlled in relation to the calculated position and the atmospheric air temperature.

Citation List

Patent Literature

Patent Literature 1: Unexamined Japanese Patent Application Kokai Publication No. 2009-14219

Summary of Invention

Technical Problem

In the air-conditioning system disclosed in Patent Literature 1 above, when the layout of the living space changes, for example, when the location of a desk is changed, and the installation location of the attached temperature sensor changes, it is necessary to perform work to change the linkage between each temperature sensor and the air-conditioning device. This kind of work is very troublesome for a manager or occupants.

Moreover, in the air-conditioning system disclosed in Patent Literature 1 described above, it is necessary to install a plurality of temperature sensors. Temperature sensors are very expensive, with the cost per temperature sensor being in the tens of thousands of yen, so installing such an air-conditioning system requires an enormous cost.

The present invention is devised in consideration of the situation described above, and an object thereof is to provide a control device, a control method and a program that make it possible to reduce a workload, and increase comfort of the occupants at low cost.

Solution to Problem

In order to accomplish the object above, the control device of the present invention is provided according to independent claim 1. The control device is a control device that controls a plurality of air-conditioning devices that are installed at different locations in a specified living space. A plurality of wireless adapters are installed at different locations in the living space in order to acquire, through wireless communication with a portable terminal which is able to be carried including sensors for detecting environmental information related to air conditioning, a distance to the portable terminal and the environmental information that is detected by the sensors. A portable terminal location calculator calculates a location of the portable terminal inside the living space based on: distances to the portable terminal that are acquired by each of the wireless adapters and installation location information for each of the wireless adapters. A related device identifier, based on the location of the portable terminal that is calculated by the portable terminal location calculator and installation location information for each of the air-conditioning devices, identifies from among the plurality of air-conditioning devices, a related device that has an influence on an environment surrounding the portable terminal. A target value corrector, based on a difference between environmental information that is detected by the related device that is identified by the related device identifier and environment information that is detected by the sensor, corrects a target value for environmental information that is used in environment control of the related device. A control executor controls the related device based on the target value that is corrected by the target value corrector.

Advantageous Effects of Invention

According to the present invention, based on the difference between environmental information for the location where the occupant is located that is detected by the sensor included in the portable terminal, and environmental information that is detected by a related device that influences the environment at that position, a target value for the environmental information that is used in environment control of the related device is corrected. As a result, it is possible for the environmental information for the location where the occupant is located to automatically approach a target value. According to the present invention, it is not necessary to perform adjustment of the location of sensors as the layout of living space changes, and it is not necessary to have a number of sensors, so it is possible to reduce the workload, and to improve comfort of the occupant at low cost.

Brief Description of Drawings

FIG. 1 is a block diagram illustrating a configuration of an air-conditioning system according to Embodiment 1 of the present invention;
FIG. 2 is a block diagram illustrating a configuration of an air-conditioning control device in FIG. 1;
FIG. 3 is a flowchart of initial setting processing for various data in a data manager of a controller in FIG. 2;
FIG. 4 is a diagram illustrating an example (1) of a floor plan of a living space that is displayed on the display device in FIG. 2;
FIG. 5 is a diagram illustrating an example (2) of the floor plan of the living space that is displayed on the display device in FIG. 2;
FIG. 6 is a flowchart of sensor terminal location calculation processing that is executed by a sensor terminal location calculator in FIG. 2.
FIG. 7 is a diagram that schematically illustrates an example of calculation of a current location of a sensor terminal;
FIG. 8 is a diagram that schematically illustrates an example of processing that is executed by a related air-conditioning device identifier;
FIG. 9 is a flowchart of corrected set temperature calculation processing that is executed by a corrected set temperature calculator and a set temperature control executor;
FIG. 10 is a diagram comparing room temperature data that is measured by an air-conditioning device (indoor device) and a sensor terminal, respectively;
FIG. 11 is a diagram for explaining a state where the sensor terminal is carried around and a set temperature is automatically corrected;
FIG. 12 is a block diagram illustrating a configuration of an air-conditioning system according to Embodiment 2 of the present invention;
FIG. 13 is a block diagram illustrating a configuration of an air-conditioning control device in FIG. 12;
FIG. 14 is a block diagram illustrating a configuration of an air-conditioning system according to Embodiment 3 of the present invention; and
FIG. 15 is a block diagram illustrating a configuration of an air-conditioning control device in FIG. 14.

Description of Embodiments

Hereinafter, embodiments of the present invention will be explained in detail with reference to the drawings.

Embodiment 1

First, Embodiment 1 of the present invention will be explained.

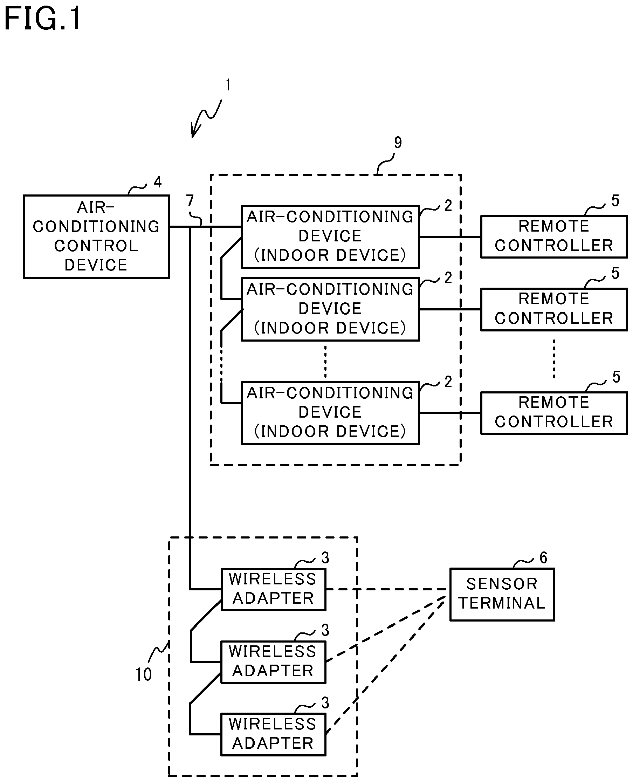

FIG. 1 illustrates a configuration of an air-conditioning system 1 of Embodiment 1 of the present invention. As illustrated in FIG. 1, the air-conditioning system 1 according to the present embodiment has a plurality of air-conditioning devices (indoor devices) 2, wireless adapters 3, an air-conditioning control device 4, remote controllers 5 and a sensor terminal 6.

The air-conditioning devices (indoor devices) 2, the wireless adapters 3 and the air-conditioning control device 4 are connected together by dedicated communication lines 7 such that communication is possible. The air-conditioning control device 4 which is not particularly illustrated in FIG. 1 is connected not only to the air-conditioning devices (indoor devices) 2, but is also connected to heat-source side devices (outdoor devices) having such as a compressor by way of the dedicated communication lines 7 such that communication is possible.

Furthermore, each of the remote controllers 5 that is capable of one operation of one of the air-conditioning devices (indoor devices) 2 is connected to the one of the air-conditioning devices (indoor devices) 2. The sensor terminal 6 is connected to the wireless adapters 3 by wireless communication. The sensor terminal 6 mainly reports the state of various sensors and sends replies to the wireless adapters 3.

Each of the plurality of air-conditioning devices (indoor devices) 2 is located at a different location in a specified living space. Each air-conditioning device (indoor device) 2 performs air conditioning of the living space under the control of the air-conditioning control device 4 so that the temperature of the living space approaches a set target temperature. The plurality of air-conditioning devices (indoor devices) 2 is also referred to as an air-conditioning device group 9.

Each of the plurality of wireless adapters 3 has a wireless communication function such as UWB (Ultra Wide Band), ZigBee or the like that is capable of measuring the distance between wireless terminals. Each wireless adapter 3 is capable of using this wireless communication function to measure the distance to the sensor terminal 6.

Moreover, each wireless adapter 3 relays data communication between the air-conditioning control device 4 and the sensor terminal 6. Each wireless adapter 3, during relay, converts data that is specified by a communication protocol of the dedicated communication lines 7 to data that is specified by a wireless communication protocol. As a result, the air-conditioning control device 4 and the sensor terminal 6 are able to communicate with each other by way of the wireless adapter 3. The plurality of wireless adapters 3 is also referred to as a wireless adapter group 10 below.

The remote controllers 5 are operation terminals for a user to operate the air-conditioning devices (indoor devices) 2. By operating the remote controller 5, it becomes possible, regarding a corresponding air-conditioning device (indoor device) 2, to run and stop, change an operating mode such as cooling and heating, change the target temperature, and change air direction and wind speed and the like.

In order to perform energy-saving control of the air-conditioning device (indoor device) 2, it is possible for the remote controller 5 to set a low-temperature limit for operation during cooling, and a high-temperature limit for operation during heating. For example, with this function, by the manager setting the low-temperature limit for cooling to 27°C, it becomes impossible for a user to set the indoor temperature of the remote controller 5 to less than 27°C.

The sensor terminal 6 is of a size that allows carrying as a portable terminal. The sensor terminal 6 includes various sensors for detecting temperature, humidity, $CO_2$ density and the like. The sensor terminal 6 periodically transmits temperature data, humidity data, $CO_2$ density data and the like that are detected by the various sensors to the air-conditioning control device 4 by way of the wireless adapter 3 using wireless communication.

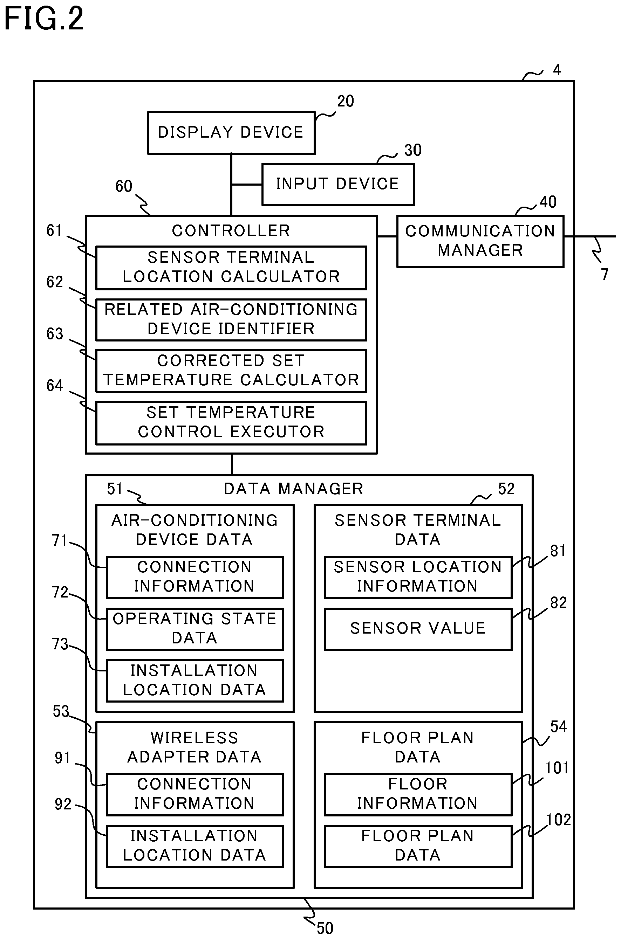

The air-conditioning control device 4 performs overall control and management of the air-conditioning device group 9 that includes the plurality of air-conditioning devices (indoor devices) 2. As illustrated in FIG. 2, the air-conditioning control device 4 has a display device 20, an input device 30, a communication manager 40, a data manager 50 and a controller 60.

The display device 20, under control of the controller 60, displays monitoring screens and operation screens of the operating state of the air-conditioning devices (indoor devices) 2, respectively. The display device 20 is also capable of displaying a floor plan of a living space and the like.

The input device 30 includes a touch panel, mouse, keyboard and the like. The touch panel is located on the display device 20. By the manager or the like operating the touch panel, mouse, keyboard or the like, signals are outputted to the controller 60 according to operation contents (for example, switching a monitoring screen, operating the air-conditioning device group 9, and giving instructions for various settings and the like).

The communication manager 40 is an interface with the dedicated communication lines 7. By way of this communication manager 40, data is transmitted to or received from the air-conditioning devices (indoor devices) 2.

The data manager 50 manages various data that is required by the controller 60 in order to perform control of the air-conditioning device group 9. The data managed by the data manager 50 is roughly classified as air-conditioning device data 51, sensor terminal data 52, wireless adapter data 53 and floor plan data 54.

The air-conditioning device data 51 includes connection information 71, operating state data 72 and installation location data 73 for each air-conditioning device (indoor device) 2.

The connection information 71 includes an address number, operation group number and model ID number for each air-conditioning device (indoor device) 2 that is managed by the air-conditioning control device 4. The connection information 71 is data that is required for controlling each air-conditioning device (indoor device) 2.

The operating state data 72 includes data that indicates a current operating state of the air-conditioning device (indoor device) 2, such as a running/stopped state of each air-conditioning device (indoor device) 2, an operating mode such as cooling or heating, a set temperature, and a room temperature. The operating state data 72 is constantly updated through exchanging data with the air-conditioning devices (indoor devices) 2.

The installation location data 73 includes data that indicates the installation location (floor number, location coordinates) of each air-conditioning device (indoor device) 2. That data expresses position coordinates (dot units) on a floor plan when the air-conditioning device is placed over an image of the floor plan of the living space, or expresses as a percentage the ratio of the location with respect to the overall vertical and horizontal size of the living space floor when a location on the floor plan (for example, the position in upper left corner) is taken to be a reference.

The sensor terminal data 52 includes sensor location information 81, which is location information for the sensor terminal 6, and sensor values 82.

The sensor location information 81 is data that indicates location information that is calculated by the air-conditioning control device 4 based on measurement results for the distance from the wireless adapter group 10. The sensor location information 81 is periodically updated according to the measurement results for the distance from the wireless adapter group 10.

The sensor values 82 are measurement values of various kinds of sensors built in to the sensor terminal 6 such as a temperature sensor, humidity sensor, $CO_2$ (carbon dioxide) density sensor and the like. The sensor values 82 are constantly updated to the various measurement values that are outputted from the sensor terminal 6 according to a monitor request that is transmitted to the sensor terminal 6 from the air-conditioning control device 4 at the timing of calculation of the sensor location information 81.

The wireless adapter data 53 includes connection information 91 and installation location data 92 for each wireless adapter 3.

The connection information 91 is data that is required for performing communication with each wireless adapter 3, such as an address number of each wireless adapter 3 that is managed by the air-conditioning control device 4.

The installation location data 92 is data that indicates an installation location (floor number, location coordinates) of each wireless adapter 3 in the living space. This data expresses position coordinates (dot units) on a floor plan when the air-conditioning device is placed over an image of the floor plan of the living space, or expresses as a percentage the ratio of the location with respect to the overall vertical and horizontal size of the living space floor when a location on the floor plan (for example, the position in upper left corner) is taken to be a reference.

The floor plan data 54 includes floor information 101, and floor plan data 102.

The floor information 101 is data that indicates the number of floors and size (image size) of the floors of the living space, and is set during the initial setting of the air-conditioning control device 4.

The floor plan data 102 is image data of the floor plan that is displayed on the display device 20 of the air-conditioning control device 4. This image data is created in a format such as a bitmap format, GIF (Graphics Interchange Format) or the like.

Data that is stored in the data manager 50 is constantly written and read by the controller 60.

The controller 60 has a CPU and memory (neither are illustrated in the figure). The CPU enables the function of the controller 60 by executing programs that are stored in the memory.

The controller 60 controls the air-conditioning device group 9 that includes the air-conditioning devices 2. The controller 60 includes a sensor terminal location calculator 61, a related air-conditioning device identifier 62, a corrected set temperature calculator 63 and a set temperature control executor 64.

The sensor terminal location calculator 61 calculates the location of the sensor terminal 6 based on the distances from the sensor terminal 6 that are obtained by each wireless adapter 3, and the preset installation location information (installation location data 92) of each wireless adapter 3. The calculated location data is stored in the data manager 50 as the sensor location information 81.

Based on the location of the sensor terminal 6 that is calculated by the sensor terminal location calculator 61 and the installation location information for each air-conditioning device (indoor device) 2, the related air-conditioning device identifier 62 identifies from among a plurality of air-conditioning devices (indoor devices) 2 a related air-conditioning device that influences the environment around the sensor terminal 6. More specifically, based on the sensor location information 81 for the sensor terminal 6 and the installation location data 73 for the air-conditioning device group 9, the related air-conditioning device identifier 62 identifies the air-conditioning device (indoor device) 2 that has the most influence on the location of the sensor terminal 6. In this embodiment, the air-conditioning device (indoor device) 2 that is closest in distance to the sensor terminal 6 is identified as the related air-conditioning device.

The corrected set temperature calculator 63, based on the difference between the temperature that is detected by the related air-conditioning device identified by the related air-conditioning device identifier 62, and the temperature that is detected by the sensor of the sensor terminal 6, corrects a target value for a room temperature that is used in environment control by the related air-conditioning device. More specifically, the corrected set temperature calculator 63 calculates the difference (temperature difference) between the temperature that is included in the sensor values 82, and included in the operating state data 72 of the related air-conditioning device identified by the related air-conditioning device identifier 62. Furthermore, in consideration of the calculated temperature difference, the corrected set temperature calculator 63 corrects the set temperature (target value) of the air-conditioning devices (indoor devices) 2 so that the measurement point obtains a proper room temperature, and calculates a corrected set temperature.

The set temperature control executor 64 controls the related air-conditioning device by transmitting a set temperature (target value) that is calculated by the corrected set temperature calculator 63 to the related air-conditioning device that is identified by the related air-conditioning device identifier 62.

Next, the operation of the air-conditioning control device 4 will be explained.

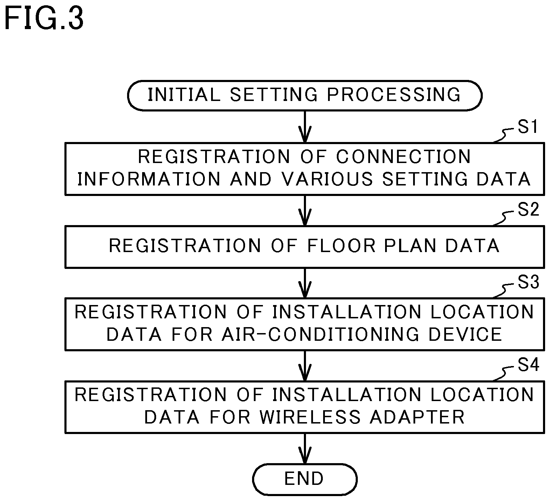

First, the initial setting processing for setting various data of the data manager 50 of the air-conditioning control device 4 will be explained. FIG. 3 illustrates a flowchart for the initial setting processing for setting various data of the data manager 50. This processing is executed after the air-conditioning system 1 has been started.

After the air-conditioning system 1 has been started, first, the controller 60, according to operation input to the input device 30, registers the connection information 71 of the air-conditioning device (indoor device) 2 that is to be the target of management, the connection information 91 for the wireless adapter 3 and various setting data in the data manager 50 (step S1).

Next, the controller 60, according to operation input to the input device 30, registers floor plan data for each floor of the living space as floor plan data 102 in the data manager 50 (step S2). The floor plan data 102 is allowed to be created using a personal computer or the like to be obtained from a removable medium such as a USB memory or the like. It is possible to create the floor plan data 102 by using a touch panel of the input device 30, and directly drawing a floor layout on the floor plan that is displayed on the display device 20, and selecting and arranging image parts such as walls, desks and the like.

Next, the controller 60, according to operation input to the input device 30, registers the installation location data 73 for each air-conditioning device (indoor device) 2 (step S3).

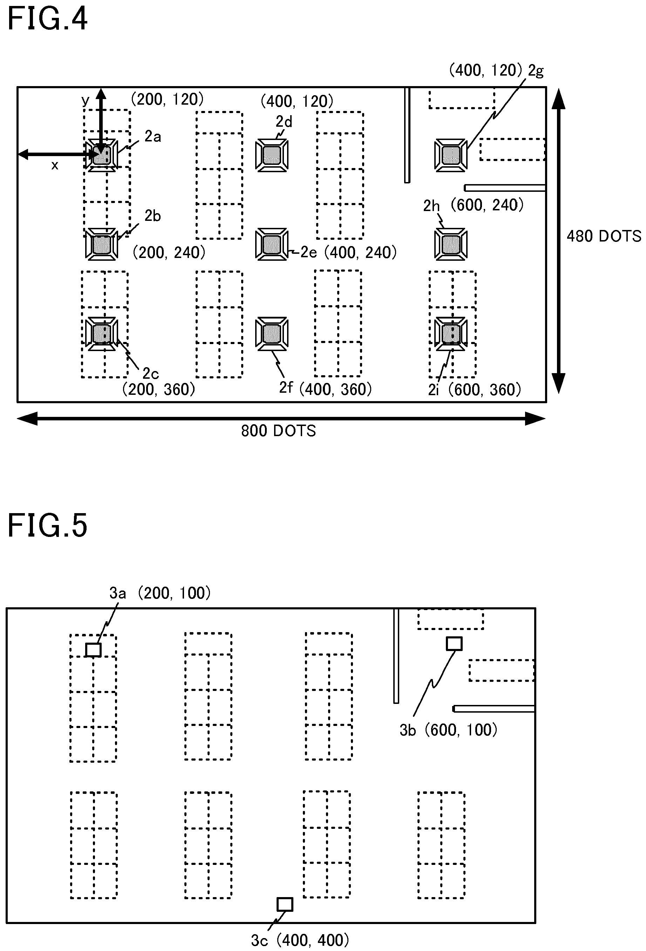

FIG. 4 illustrates an image that is displayed on the display device 20 based on a floor plan for a certain living space. In this image, a floor plan is displayed on the display device 20 of the air-conditioning control device 4 that is based on floor plan data that is registered in step S2, then in step S3, icons of the air-conditioning devices (indoor devices) 2 are arranged on that floor plan. The arrangement locations of the icons of the air-conditioning devices (indoor devices) 2 are set by dragging operation on the touch panel, or by inputting numerical values for a coordinate location, and then that data is registered in the data manager 50 as installation location data 73 for the air-conditioning devices (indoor devices) 2.

The floor plan illustrated in FIG. 4 has an image size of 800 dots in the horizontal direction and 480 dots in the vertical direction. On this floor plan, nine air-conditioning devices (indoor devices) 2a to 2i are arranged as air-conditioning devices (indoor devices) 2. For example, with an upper left corner as a reference (origin), the air-conditioning device (indoor device) 2a is arranged in the location (x coordinate, y coordinate) = (200, 120), the air-conditioning device (indoor device) 2b is arranged in the location (x coordinate, y coordinate) = (200, 240), and the air-conditioning device (indoor device) 2i is arranged in the location (x coordinate, y coordinate) = (600, 360).

Returning to FIG. 3, next, the controller 60, according to operation input to the input device 30, registers the installation location data 92 for each wireless adapter 3 (step S4).

In the example illustrated in FIG. 5, the floor plan that is registered in step S2 above is displayed on the display device 20. In FIG. 5, icons of wireless adapters 3a, 3b and 3c are arranged on that floor plan as the wireless adapters 3. For example, the wireless adapter 3a is arranged in the location (x coordinate, y coordinate) = (200, 100), the wireless adapter 3b is arranged in the location (x coordinate, y coordinate) = (600, 100) and the wireless adapter 3c is arranged in the location (x coordinate, y coordinate) = (400, 400).

The location of the icon of the wireless adapters 3 is set by dragging operation on the touch panel of the input device 30, or by inputting numerical values of coordinate locations, and arrangement location data thereof is registered in the data manager 50 as the installation location data 92.

At this point, the initial setting processing is finished.

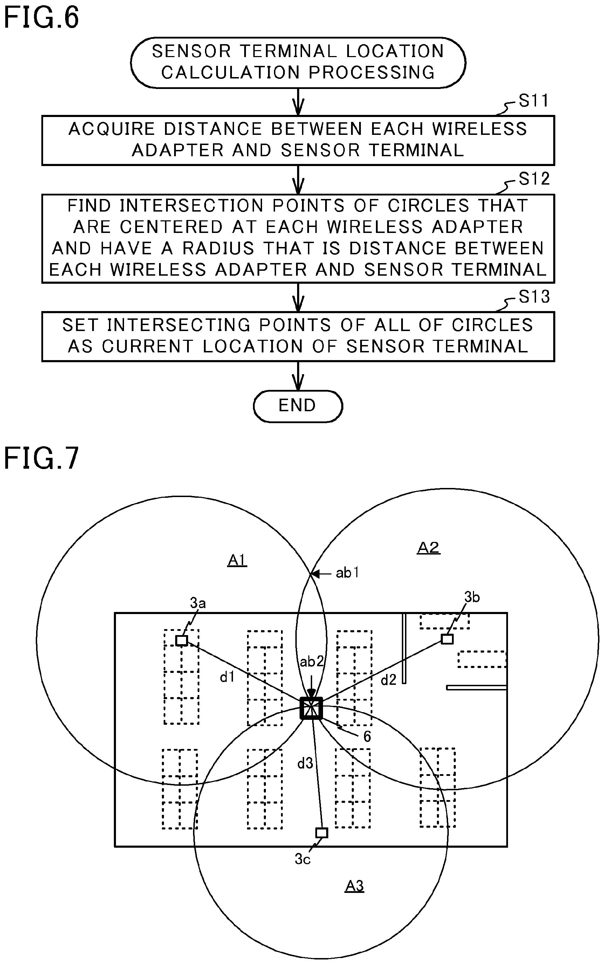

Next, the processing that is executed by the sensor terminal location calculator 61 is explained with reference to FIG. 6 and FIG. 7.

FIG. 6 illustrates a flowchart of sensor terminal location calculation processing. FIG. 7 schematically illustrates an example of calculating a current location of the sensor terminal 6.

In the example illustrated in FIG. 7, as with the example illustrated in FIG. 5, there are three wireless adapters 3 that measure the distance from the sensor terminal 6 (these are taken to be wireless adapters 3a, 3b and 3c, respectively), and the distances measured by each wireless adapter are taken to be d1, d2 and d3.

The sensor terminal location calculator 61 first obtains the distance between each wireless adapter 3 and the sensor terminal 6 from each wireless adapter 3 (step S11). For example, in the example illustrated in FIG. 7, the distances d1, d2 and d3 between the respective wireless adapters 3a, 3b, 3c and the sensor terminal 6 are obtained.

Returning to FIG. 6, the sensor terminal location calculator 61 then, based on the installation location data 92 for each wireless adapter 3, finds intersecting points of circles that are centered at each wireless adapter 3 and that have a radius equal to the distance between each wireless adapter 3 and the sensor terminal 6 (step S12). More specifically, the sensor terminal location calculator 61 generates equations for circles that are centered at each wireless adapter 3 and that have a radius equal to the distance between each wireless adapter 3 and the sensor terminal 6, and of those generated circles, calculates the intersecting points between a pair of circles by solving the equations for two circles as simultaneous equations.

In the example illustrated in FIG. 7, the equations for circles A1, A2 and A3 that are centered at coordinates of the wireless adapters 3a, 3b and 3c and that have radii that are equal to distances d1, d2 and d3 from the sensor terminal 6 are generated. Then, for example, by solving the equations for circles A1 and A2, intersecting points ab1 and ab2 are calculated. Here, the intersecting points for the circles A1 and A2, and circles A2 and A3 are found in a similar way.

Returning to FIG. 6, next, the sensor terminal location calculator 61 calculates intersecting points of all of the circles as the current location of the sensor terminal 6 (step S13). In the example illustrated in FIG. 7, the intersecting point ab2 is calculated as the current location of the sensor terminal 6.

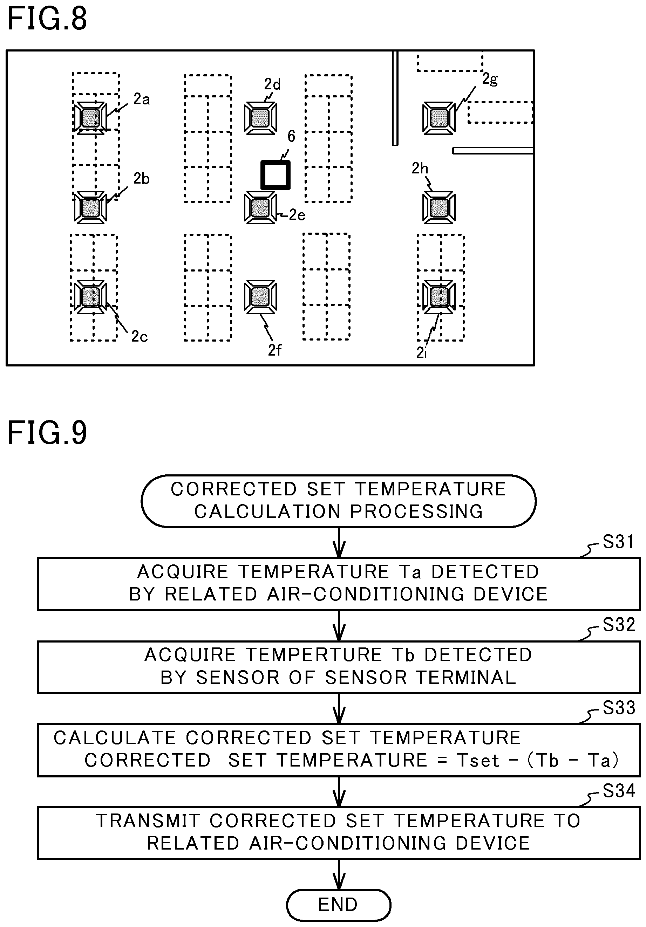

Next, the processing that is executed by the related air-conditioning device identifier 62 will be explained with reference to FIG. 8.

FIG. 8 illustrates an example of an image in which the installation locations of each of the air-conditioning devices 2a to 2i according to the installation location data 73 and the location of the sensor terminal 6 that is calculated by the sensor terminal location calculator 61 are superposed on the floor plan.

The related air-conditioning device identifier 62 calculates the air-conditioning device (indoor device) 2 that has the most influence on the air conditioning environment at the location of the sensor terminal 6 as the air-conditioning device that is closest in distance to the sensor terminal 6. In the example illustrated in FIG. 8, the air-conditioning device (indoor device) 2e is the closest air-conditioning device (indoor device) 2, so that the related air-conditioning device identifier 62 identifies this air-conditioning device (indoor device) 2e as the related air-conditioning device.

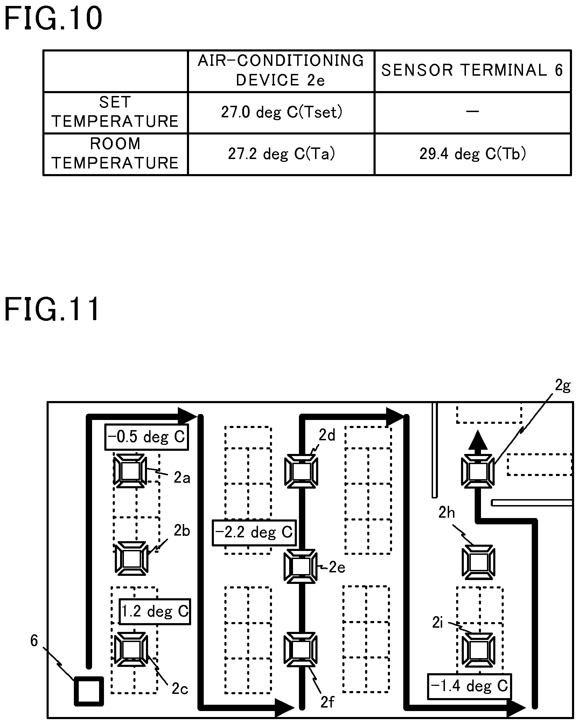

Next, the processing that is executed by the corrected set temperature calculator 63 and set temperature control executor 64 will be explained with reference to FIG. 9 and FIG. 10.

FIG. 9 illustrates a flowchart of the set temperature calculation processing that is executed by the corrected set temperature calculator 63. FIG. 10 illustrates a table that compares room temperature data measured by both the air-conditioning device (indoor device) 2e and the sensor terminal 6.

First, the corrected set temperature calculator 63 obtains temperature Ta detected by the related air-conditioning device (for example, air-conditioning device 2e) that is calculated by the related air-conditioning device identifier 62 (step S31). Next, the corrected set temperature calculator 63 obtains temperature Tb (sensor value 82) detected by the sensor of the sensor terminal 6 (step S32).

In the example illustrated in FIG. 10, the temperature detected by the air-conditioning device 2e is Ta = 27.2°C, and the temperature detected by the sensor terminal 6 is Tb = 29.4°C. In this example, at the location (height) where an occupant is actually located, the temperature does not obtain the set temperature Tset = 27.0°C that is set in the air-conditioning device (indoor device) 2e.

Returning to FIG. 9, the corrected set temperature calculator 63 uses the equation below to correct the set temperature (target value) (step S33).

$$\text{Corrected set temperature} = \text{Set temperature (Tset)} - (\text{Room temperature at the}$$

$$\text{sensor terminal 6 (Tb)} - \text{Room temperature at air-conditioning device (indoor device) 2}$$

$$\text{(Ta))} \qquad \cdots (1)$$

In the example illustrated in FIG. 10, the corrected set temperature obtains 27.0 + (29.4 - 27.2) = 24.8°C.

Returning to FIG. 9, next, the set temperature control executor 64 transmits the corrected set temperature that is calculated by the corrected set temperature calculator 63 to the related air-conditioning device (step S34). As a result, the air-conditioning environment is controlled so that the room temperature at the location where an occupant is located approaches the originally designated set temperature (27.0°C in the example above).

In this embodiment, the air-conditioning device (indoor device) 2 that is closest to the sensor terminal 6 is selected as the related air-conditioning device for which the set temperature is corrected, however, the present invention is not limited thereto. For example, the related air-conditioning device identifier 62 is allowed to identify a certain air-conditioning device (indoor device) 2 within a specified range from the sensor terminal 6 as the related air-conditioning device, and the corrected set temperature calculator 63 is allowed to reduce the corrected value of the set temperature (target value) at the related air-conditioning device as the distance between the sensor terminal 6 and the related air-conditioning device becomes longer.

In this case, for example, the set temperature of a related air-conditioning device that influences the air conditioning is allowed to be corrected so that the distance or square of the distance is used as a weighting. For example, (Tb - Ta) in the equation (1) above is allowed to be divided by the distance or square of the distance and added to Tset to calculate the corrected set temperature.

Moreover, in the case where a wall or the like is entered on the floor plan, correction is allowed to be performed in consideration of the effect of the wall. For example, the closest air-conditioning device (indoor device) 2 or the air-conditioning device (indoor device) 2 that is within a certain range without a wall being located in between is allowed to be identified as the related air-conditioning device. In this case, location information of walls that divide up the living space is included in the floor information 101 for each living space, and the related air-conditioning device identifier 62 is allowed to identify the related air-conditioning device from among the air-conditioning devices (indoor devices) 2 that are not separated from the sensor terminal 6 by a wall.

Moreover, in this embodiment, the setting unit for the corrected set temperature is taken to be 0.1°C, however, by rounding off the value or using a conversion table, it is also possible to use 1°C as the correctable set temperature unit. It is also possible not to correct the set temperature when the amount of correction is less than 1°C.

Moreover, in this embodiment, the air-conditioning control device 4 periodically monitors and obtains the location of the sensor terminal 6 and a temperature difference that is detected by the air-conditioning devices 2 and sensor terminal 6, however, this is not absolutely necessary. For example, it is also possible for the sensor terminal 6 or wireless adapters 3 to periodically notify the air-conditioning control device 4 of various data, and for the air-conditioning control device 4 to start the set temperature correction processing when the temperature difference is greater than a specified range.

Moreover, it is also possible to start the correction processing when the sensor terminal 6 stops at the same position during a fixed amount of time. In this case, an occupant carries the sensor terminal 6, and for example, moves around the room along a path such as illustrated in FIG. 11, and while holding the sensor terminal 6, stops at the location where the set temperature is to be corrected, and corrects only the air-conditioning device (indoor device) 2 that is closest to where the occupant is located.

It is also possible to press a button on the sensor terminal 6 in order to transmit to the air-conditioning control device 4 an instruction to start correction for automatically performing correction of the set temperature.

Furthermore, in this embodiment, the case of using three wireless adapters 3 has been explained, however, it is also possible to improve the precision for measuring the location of the sensor terminal 6 by increasing the number of wireless adapters 3. It is also possible to measure the location of the sensor terminal 6 using a device other than the air-conditioning control device 4, and for the air-conditioning control device 4 to monitor measurement results for the location of the sensor terminal 6.

Moreover, in this embodiment, the corrected set temperature is always calculated using the same calculation equation, however, it is possible to change the calculation equation according to a season, outside temperature or time of day, and to change the set temperature correction width, and it is possible to perform learning control and store the correlation between a season, outside temperature, time of day and set temperature correction width in a table, and to use that correlation when correcting the set temperature next time.

Moreover, in this embodiment, the case of operation during cooling is explained, however, during heating, the correction direction is opposite to that during cooling and correction is performed in a direction to raise the temperature. In other words, during heating, instead of the equation (1), an equation (2) below is used.

$$\text{Corrected set temperature} = \text{Set temperature (Tset)} + (\text{Room temperature at the}$$
$$\text{air-conditioning device (indoor device) 2 (Ta)} - \text{Room temperature at the sensor terminal}$$
$$6 \text{ (Tb))} \quad \cdots (2)$$

In this embodiment, the case of changing the set temperature presuming that the air-conditioning devices (indoor devices) 2 are operating is explained, however, when the air-conditioning devices (indoor devices) 2 are stopped, it is also possible to automatically start operation of the air-conditioning devices (indoor devices) 2 by sending an operation command in addition to the set temperature.

Furthermore, the air-conditioning control device 4 (controller 60) is allowed to reference a temperature - color correlation table, which is stored by correlating temperatures with display colors, and read the color that corresponds to the temperature that is detected by the sensor terminal 6, then cause that color to be overlaid at the location of the sensor terminal 6 in an image of the floor plan that is displayed on the display device 20. By performing that operation at a plurality of locations, temperature distribution in the living space is displayed on the screen of the display device 20.

Moreover, in this embodiment, the sensor terminal 6 is such that various sensors and wireless functions are installed, however, the sensor terminal 6 is also allowed to have a display device and input device. In that case, the display device is allowed to have the floor plan as the background thereof to display the current location, temperature, movement path, temperature distribution and the like.

As explained above, with the air-conditioning control device 4 according to Embodiment 1, the target value for the room temperature that is used for environment control of the related air-conditioning device is corrected based on a difference between temperature at the location where an occupant is located, which is detected by a sensor included in the sensor terminal 6, and the temperature that is detected by the related air-conditioning device that has an influence on an environment at that position. Thereby, it is possible to bring the temperature at the location where the occupant is located closer to the target value. As a result, it is possible to improve comfort of the occupant.

Further, with this embodiment, by simply walking around a living space while carrying the sensor terminal 6, the location where an occupant is located is automatically corrected to a specified room temperature, so the work of setting the temperature is simple and it is not necessary for a manager to correct the set temperature of the air-condition device group 9, and thus it is possible to reduce the work load.

Moreover, with this embodiment, the temperature is adjusted based on the location and detected temperature of the sensor terminal 6 that moves together with an occupant. Therefore, even in the case that a floor layout is changed, there is no need to perform work to change setting of the sensor location in the air-conditioning control device 4, so that system maintenance afterwards becomes simple.

Furthermore, with this embodiment, the installation location data 73 of air-conditioning devices (indoor devices) 2, and the installation location data 92 of wireless adapters 3 on a floor plan is converted to location coordinates on the floor plan and saved. As a result, a manager is able to operate the input device 30 while viewing the display device 20 of the air-conditioning control device 4 and easily set the location of the air-conditioning devices (indoor devices) 2 and wireless adapters 3.

With this embodiment, it is not necessary to install a lot of temperature sensors inside the living space, so that it is possible to reduce the cost of implementing a system.

Furthermore, with this embodiment, it is possible such as to boost the rate of air conditioning by narrowing it down to the location where an occupant is located, so that it is possible to reduce power consumed.

Embodiment 2

Next, Embodiment 2 of the present invention will be explained.

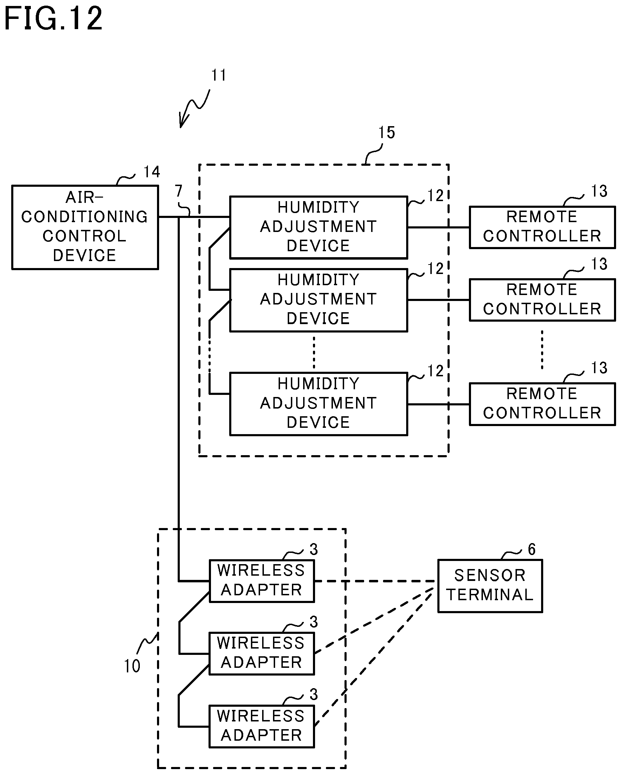

FIG. 12 illustrates a configuration of an air-conditioning system 11 according to Embodiment 2 of the present invention. As illustrated in FIG. 12, the air-conditioning system 11 according to this embodiment differs from that of

Embodiment 1 in that there is a plurality of humidity adjustment devices 12 instead of the air-conditioning devices (indoor devices) 2, there is an air-conditioning control device 14 instead of the air-conditioning control device 4, and there is a remote controller 13 instead of the remote controller 5.

The humidity adjustment devices 12, wireless adapters 3 and air-conditioning control device 14 are connected by the dedicated communication lines 7 so as to be able to communicate with each other. A remote controller 13 that is capable of one operation of each of the humidity adjustment devices 12 is connected to the each of the humidity adjustment devices 12.

A plurality of the humidity adjustment devices 12 are installed at different locations inside a specified living space, respectively. Each humidity adjustment device 12, under control by the air-conditioning control device 14, performs adjustment of the humidity in the living space so that the humidity in the living space approaches a set target value. The plurality of humidity adjustment devices 12 is also hereafter referred to as a humidity adjustment device group 15.

The remote controller 13 is an operation terminal for a user to operate the humidity adjustment device 12. By operating the remote controller 13, it is possible to start or stop operation of the corresponding humidity adjustment device 12, as well as it is possible to change target humidity of the corresponding humidity adjustment device 12.

The wireless adapters 3 and sensor terminal 6 have the same functions as those of Embodiment 1 above. In other words, each wireless adapter 3 measures the distance to the sensor terminal 6, and relays data between the sensor terminal 6 and the air-conditioning control device 14.

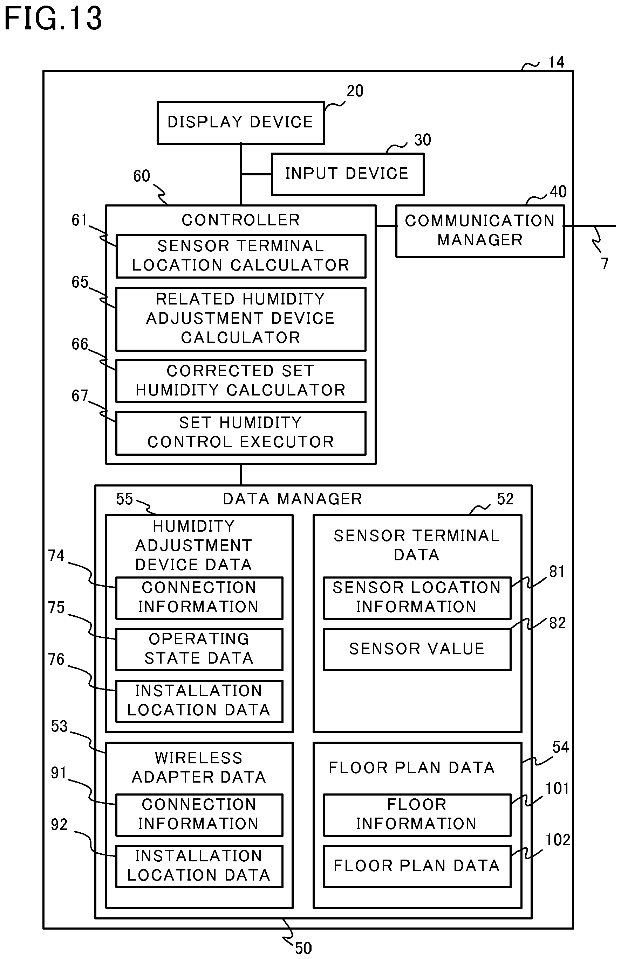

The air-conditioning control device 14 controls the humidity adjustment device group 15. FIG. 13 illustrates a construction of the air-conditioning control device 14. As illustrated in FIG. 13, the air-conditioning control device 14 is the same as the air-conditioning control device 4 in the embodiment described above in that the air-conditioning control device 14 has the display device 20, input device 30, communication manager 40, data manager 50 and controller 60.

The controller 60, in addition to the sensor terminal location calculator 61, has a related humidity adjustment device calculator 65, a corrected set humidity calculator 66 and a set humidity control executor 67. Moreover, humidity adjustment device data 55 is registered in the data manager 50.

The humidity adjustment device data 55 includes connection information 74, operating state data 75 and installation location data 76 for the humidity adjustment devices 12.

The connection information 74 includes data required for controlling each humidity adjustment device 12, such as the address number, operation group number, model ID information and the like for each humidity adjustment device 12 that is managed by the air-conditioning control device 14.

Operating state data 75 includes data that indicates a current operating state of the humidity adjustment devices 12 such as the running/stopped state of each humidity adjustment device 12, set humidity, room humidity and the like. The operating state data 75 is constantly updated through exchanging data with the humidity adjustment devices 12.

The installation location data 76 includes data that indicates an installation location (floor number, location coordinates) of each humidity adjustment device 12. That data is allowed to express position coordinates (dot units) on a floor plan when the air-conditioning devices are superposed on an image of the floor plan of the living space, or express as a percentage the ratio of the position with respect to the overall vertical and horizontal size of the living space floor when a position on the floor plan (for example, the position in upper left corner) is taken to be a reference.

The other configuration of the air-conditioning control device 14 is the same as that of the air-conditioning control device 4 according to Embodiment 1.

The initial setting processing, sensor terminal location calculation processing, related humidity adjustment device calculation processing, and corrected set humidity calculation processing by the air-conditioning control device 14 are the same as the initial setting processing, sensor terminal location calculation processing, related temperature adjustment device calculation processing, and corrected set temperature calculation processing that has been explained for Embodiment 1 except that the set temperature is replaced by humidity. Through the processing, the air-conditioning control device 14 controls air-conditioning environment by transmitting a corrected humidity to the humidity adjustment devices 12 so that the humidity where an occupant is located approaches the originally set humidity.

As explained in detail above, with the air-conditioning control device 14 according to Embodiment 2, a target value for the humidity that is used in humidity control of a related device is corrected based on a difference between the humidity of the location where an occupant is located that is detected by a sensor included in the sensor terminal 6 and the humidity that is detected by a related device that influences an environment at that location. Thereby, it is possible to make the humidity at the location where an occupant is located approach the target value. As a result, it is possible to reduce a workload, and to inexpensively improve comfort of the occupant.

Embodiment 3

Next, Embodiment 3 of the present invention will be explained.

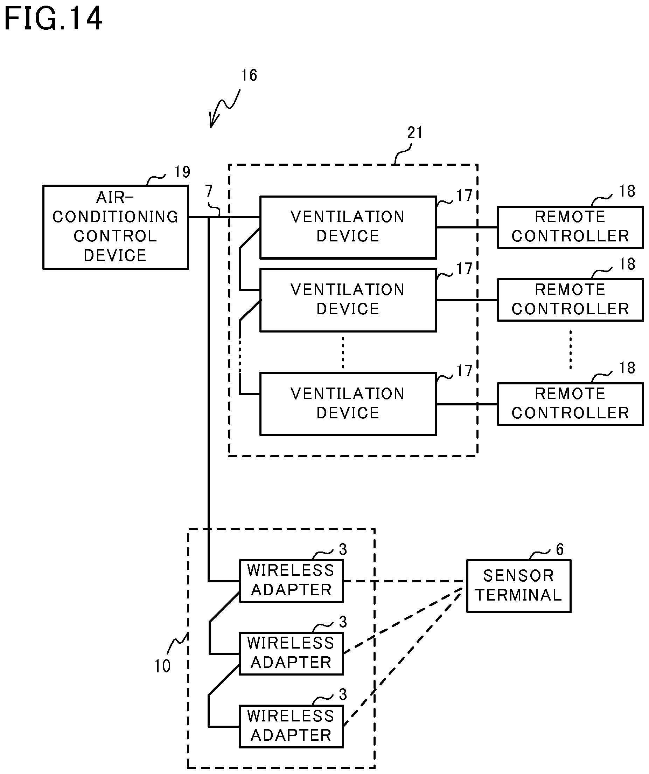

FIG. 14 illustrates a configuration of an air-conditioning system 16 according to Embodiment 3 of the present invention. As illustrated in FIG. 14, the air-conditioning system 16 according to this embodiment differs from that of Embodiment 1 in that provided are a plurality of ventilation devices 17 instead of a plurality of the air-conditioning devices (indoor devices) 2, an air-conditioning control device 19 instead of the air-conditioning control device 4, and remote controllers 18 instead of the remote controllers 5.

The ventilation devices 17, wireless adapters 3 and air-conditioning control device 19 are connected using the dedicated communication lines 7 so that communication with each other is possible. A remote controller 18 that is capable of one operation of each of the ventilation devices 17 is connected to the each of the ventilation devices 17.

The ventilation devices 17 are each located at different locations in a specified living space. Under the control of the air-conditioning control device 19, each ventilation device 17 performs ventilation of the living space so that the $CO_2$ (carbon dioxide) density in the living space reaches a target density or less. The plurality of ventilation devices 17 hereafter will also be referred to as a ventilation device group 21.

The remote controllers 18 are operation terminals for a user to operate the ventilation devices 17. By operating the remote controller 18, in addition to running or stopping the corresponding ventilation device 17, it is possible to change an air flow of the corresponding ventilation device 17.

The wireless adapters 3 and sensor terminal 6 have the same functions as those in Embodiment 1 described above. In other words, each wireless adapter 3 measures the distance to the sensor terminal 6, and relays data communicated between the sensor terminal 6 and the air-conditioning control device 19.

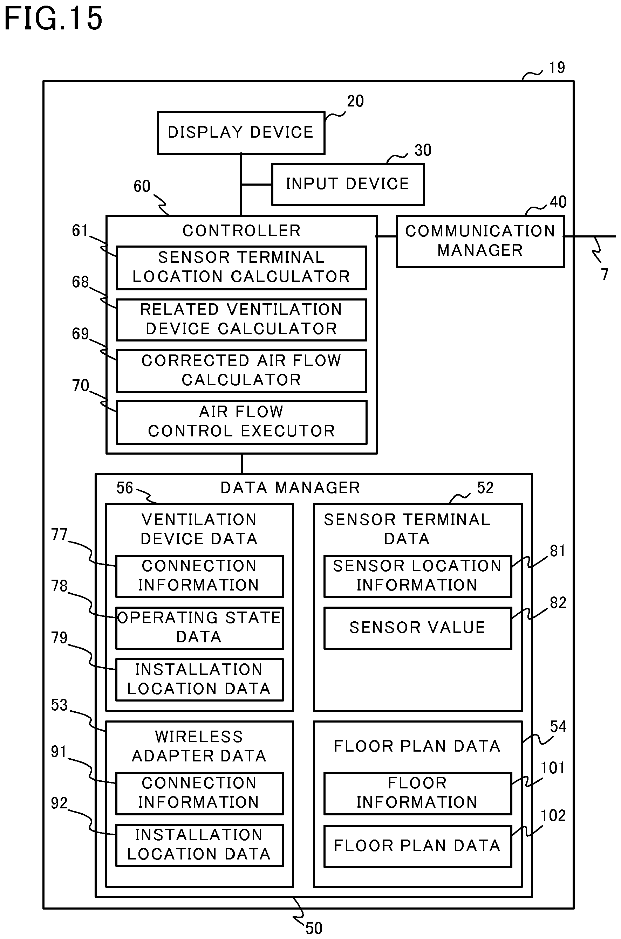

The air-conditioning control device 19 controls the ventilation device group 21. FIG. 15 illustrates a configuration of the air-conditioning control device 19. As illustrated in FIG. 15, the air-conditioning control device 19 is the same as the air-conditioning control device 14 according to the embodiment described above in that the air-conditioning control device 19 has the display device 20, the input device 30, the communication manager 40, the data manager 50 and the controller 60.

The controller 60, in addition to the sensor terminal location calculator 61, has a related ventilation device calculator 68, a corrected air flow calculator 69 and an air flow control executor 70. Moreover, ventilation device data 56 is registered in the data manager 50.

The ventilation device data 56 includes connection information 77, operating state data 78 and installation location data 79 for the ventilation devices 17.

The connection information 77 is data required for controlling each ventilation device 17, such as an address number, an operation group number, and model ID information for each ventilation device 17 that is managed by the air-conditioning control device 19.

The operating state data 78 includes data that indicates a current operating state of the ventilation devices 17, such as an running/stopped state, a ventilation mode, an air flow and the like of each ventilation device 17. The operating state data 78 is constantly updated through exchanging data with the ventilation devices 17.

The installation location data 79 includes data that indicates an installation location (floor number, location coordinates) of each ventilation device 17. That data is allowed to express position coordinates (dot units) on an indoor floor plan when the air-conditioning devices are superposed on an image of the floor plan of the living space, or express as a percentage a ratio of a position with respect to the overall vertical and horizontal size of the living space floor when a position on the floor plan (for example, the position in upper left corner) is taken to be a reference.

The other configuration of the ventilation control device 19 is the same as that of the air-conditioning control device 4 according to Embodiment 1 described above.

The initial setting processing, sensor terminal location calculation processing, related ventilation device calculation processing, and corrected air flow calculation processing by the air-conditioning control device 19 are the same as the sensor terminal location calculation processing, related air-conditioning device calculation processing, and corrected set temperature calculation processing that have been explained for Embodiment 1 except that the set temperature is replaced by air flow (including run and stop instructions). The air-conditioning control device 19 controls air-conditioning environment where an occupant is located by transmitting a corrected air flow (including run and stop instructions) to the ventilation devices 17 so that the $CO_2$ density where the occupant is located is decreased to a specified density or less.

In this embodiment, the air flow is adjusted according to the measured $CO_2$ density, however, in the case where the measured $CO_2$ density is less than a specified density, it is possible to stop the ventilation devices 17 and operate the ventilation devices only when it is necessary.

As explained in detail above, with the air-conditioning control device 19 according to Embodiment 3, a target value for the $CO_2$ density that is used in humidity control of a related device is corrected based on a difference between the $CO_2$ density of the location where an occupant is located that is detected by a sensor included in the sensor terminal 6 and the $CO_2$ density that is detected by a related device that influences the environment at that location. Thereby, it is possible to make the $CO_2$ density at the location where an occupant is located approach a target value. As a result, it is possible to reduce a workload, and to inexpensively improve comfort of the occupant.

In the embodiments above, a program that is executed is stored and distributed on a computer-readable recording medium such as a flexible disk, CD-ROM (Compact Disk Read-Only Memory), DVD (Digital Versatile Disk), MO (Magneto-Optical Disk) and the like, and the program is installed, so that a system that executes the processing described above is allowed to be configured.

Moreover, the program is allowed to be stored in a disk device or the like that is included in a specified server on a communications network such as the Internet so as to be superimposed on a carrier wave and downloaded, for example.

When the functions described above are achieved by being divided up in OS (Operating Systems) or achieved by the OS and applications working together, it is possible to only store a part other than that of the OS on a medium, and download the part.

Various embodiments and modifications are available to the present invention without departing from the broad sense of spirit and scope of the present invention. The above-described embodiments are given for explaining the present invention and do not confine the scope of the present invention. In other words, the scope of the present invention is set forth by the scope of claims, not by the embodiments. Various modifications made within the scope of claims and scope of significance of the invention equivalent thereto are considered to fall under the scope of the present invention.

Industrial Applicability

The present invention is suitable for environment control of a living space in which a plurality of environment control devices (air-conditioning devices (indoor devices), humidity control devices, ventilation devices and the like) are installed.

Reference Signs List

| 1 | Air-conditioning system |
| 2, 2a to 2i | Air-conditioning device (indoor device) |
| 3, 3a to 3c | Wireless adapter |
| 4 | Air-conditioning control device |

| 5 | Remote controller |
| 6 | Sensor terminal |
| 7 | Dedicated communication line |
| 9 | Air-conditioning device group |
| 10 | Wireless adapter group |
| 11 | Air-conditioning system |
| 12 | Humidity adjustment device |
| 13 | Remote controller |
| 14 | Air-conditioning control device |
| 15 | Humidity adjustment device group |
| 16 | Air-conditioning system |
| 17 | Ventilation device |
| 18 | Remote controller |
| 19 | Air-conditioning control device |
| 20 | Display device |
| 21 | Ventilation device group |
| 30 | Input device |
| 40 | Communication manager |
| 50 | Data manager |
| 51 | Air-conditioning device data |
| 52 | Sensor terminal data |
| 53 | Wireless adapter data |
| 54 | Floor plan data |
| 55 | Humidity adjustment device data |
| 56 | Ventilation device data |
| 60 | Controller |
| 61 | Sensor terminal location calculator |
| 62 | Related air-conditioning device identifier |
| 63 | Corrected set temperature calculator |
| 64 | Set temperature control executor |
| 65 | Related humidity adjustment device calculator |
| 66 | Corrected set humidity calculator |
| 67 | Set humidity control executor |
| 68 | Related ventilation device calculator |
| 69 | Corrected air flow calculator |
| 70 | Air flow control executor |
| 71 | Connection information |
| 72 | Operating state data |
| 73 | Installation location data |
| 74 | Connection information |
| 75 | Operating state data |
| 76 | Installation location data |
| 77 | Connection information |
| 78 | Operating state data |
| 79 | Installation location data |
| 81 | Sensor location information |
| 82 | Sensor value |
| 91 | Connection information |
| 92 | Installation location data |
| 101 | Floor information |
| 102 | Floor plan data |

## Claims

1. A control device (4) that controls a plurality of air-conditioning devices (2) that are installed at different locations in a specified living space, comprising:

a portable terminal location calculator (61), configured to calculate a location of a portable terminal (6) inside the living space based on: distances to the portable terminal (6) that are acquired through wireless communications with the portable terminal (6) by each of a plurality of wireless adapters (3) installed at different locations in the living space; and installation location information for each of the wireless adapters (3), the portable terminal (6) including sensors for detecting environmental information related to air conditioning;

a related device identifier (62), configured to, based on the location of the portable terminal (6) that is calculated by the portable terminal location calculator (61) and installation location information for each of the air-conditioning devices (2), identify from among the plurality of air-conditioning devices (2), a related device that has an influence on an environment surrounding the portable terminal (6);

a target value corrector (63), configured to correct a target value for environmental information that is used in environment control of the related device;

a control executor (64), configured to control the related device based on the target value that is corrected by the target value corrector (63),

the control device (4) being **characterized in that** the corrected target value is based on a difference between environmental information detected by the related device identified by the related device identifier (62) and environmental information that is detected by the sensors of the portable terminal

and further **characterized in that** the control device further comprises

a memory (50), configured to store image data for a floor plan of the living space, installation location information for each of the air-conditioning devices (2) in the image data, and installation location information for each of the wireless adapters (3) in the image data;

a display device (20), configured to display an image of the floor plan based on the image data; and

an input device (30), configured to input the installation location information for each of the air-conditioning devices (2) and the installation location information for each of the wireless adapters (3) based on operation input; wherein

the portable terminal location calculator (61) is further configured to convert the location of the portable terminal (6) in the living space to a location in the image data; and

the related device identifier (62) is configured to further identify the related device based on the location of the portable terminal (6) that is converted to the location in the image data.

2. The control device (4) according to Claim 1, wherein
the related device identifier (62) is configured to identify a closest air-conditioning device (2) to the portable terminal (6) as the related device.

3. The control device (4) according to Claim 1, wherein
the related device identifier (62) is configured to identify the air-conditioning device in a specified range from the portable terminal (6) as the related device; and
the target value corrector (63) is configured to reduce a correction amount of the target value of the environmental information of the related device as a distance between the portable terminal (6) and the related device becomes longer.

4. The control device (4) according to Claim 2 or 3, wherein
information related to a floor plan of the living space includes location information of walls that divide up the living space; and
the related device identifier (62) is configured to, based on the location information of the walls, identify the related device from among air-conditioning devices (2) that are not separated from the portable terminal (6) by the walls.

5. The control device (4) according to any one of Claims 1 to 4, wherein
the memory (50) is configured to store a correlation table that stores a correlation between the environmental information related to air conditioning and display colors, and
the control device (4) further comprises a controller (60) configured to refer to the correlation table to obtain a display color that corresponds to the environmental information that is detected by the sensors and obtained from each of the wireless adapters (3), and overlays and displays the display color on the display device (20) at the location of the portable terminal (6) inside the image based on the image data that is calculated by the portable terminal location calculator (61).

6. The control device (4) according to any one of Claims 1 to 5, wherein

the environmental information related to air conditioning includes at least one of an air temperature, a humidity and a carbon dioxide density.

7. The control device (4) according to any one of Claims 1 to 6, wherein when the sensors remain stationary for a given period, the target value corrector (63) begins to correct the target value.

8. An air-conditioning system comprising:

the control device (4) according to any one of Claims 1 to 7;
a portable terminal (6) including sensors for detecting environmental information related to air conditioning; and
a plurality of wireless adapters (3) installed at different locations in the living space so as to acquire a distance to the portable terminal (6) and environmental information detected by the sensors through wireless communications with the portable terminal (6).

9. A method of controlling a plurality of air-conditioning devices (2) that are installed at different locations in a specified living space, the method comprising:

a portable terminal location calculation step of, by performing wireless communication with a portable terminal (6) that is able to be carried including sensors that detect environmental information related to air conditioning, calculating the location of the portable terminal (6) in the living space based on: distances to the portable terminal (6) that are acquired by each of a plurality of wireless adapters (3) that are installed at different locations in the living space; and installation location information for each of the wireless adapters (3);
a related device identification step of, based on the location of the portable terminal (6) that is calculated in the portable terminal location calculation step and the installation location information of each of the air-conditioning devices (2), identifying from among a plurality of the air-conditioning devices (2) a related device that influences environment around the portable terminal (6);
a target value correction step of, based on a difference between environmental information that is detected by the related device that is identified in the related device identification processing, and the environmental information that is detected by the sensors, correcting a target value of the environmental information that is used in environment control by the related device;
a control execution step of, based on the target value that is corrected in the target value correction processing, controlling the related device; and
the method further comprising: storing image data for a floor plan of the living space, installation location information for each of the air-conditioning devices in the image data, and installation location information for each of the wireless adapters in the image data;
displaying an image of the floor plan based on the image data; and
inputting the installation location information for each of the air-conditioning devices and the installation location information for each of the wireless adapters based on operation input; wherein
the portable terminal location calculation step further comprises converting the location of the portable terminal in the living space to a location in the image data; and
the related device identification step further comprises identifying the related device based on the location of the portable terminal that is converted to the location in the image data.

10. A program for causing a computer that controls a plurality of air-conditioning devices (2) that are installed at different locations in a specified living space configured to implement the method as recited in claim 9.

**Patentansprüche**

1. Steuereinrichtung (4), die eine Vielzahl von Klimaanlagen (2) steuert, die an verschiedenen Standorten in einem bestimmten Wohnbereich installiert sind, umfassend:

einen Tragbares-Endgerät-Standortberechner (61), der eingerichtet ist, um einen Standort eines tragbaren Endgeräts (6) innerhalb des Wohnbereichs zu berechnen auf Grundlage von: Entfernungen zum tragbaren Endgerät (6), die durch drahtlose Kommunikation mit dem tragbaren Endgerät (6) durch jeden einer Vielzahl von drahtlosen Adaptern (3) erworben werden, die an verschiedenen Standorten im Wohnbereich installiert sind; und Installationsstandortinformationen für jeden der drahtlosen Adapter (3), wobei das tragbare Endgerät (6) Sensoren zum Erfassen von Umgebungsinformationen in Bezug auf die Klimatisierung beinhaltet;

ein Zugehörige-Einrichtung-Ermittler (62), der eingerichtet ist, um auf Grundlage des Standorts des tragbaren Endgeräts (6), der durch den Tragbares-Endgerät-Standortberechner (61) berechnet wird, und Installationsstandortinformationen für jede der Klimaanlagen (2) aus der Vielzahl der Klimaanlagen (2) eine zugehörige Einrichtung zu ermitteln, die einen Einfluss auf eine Umgebung um das tragbare Endgerät (6) herum hat;

einen Sollwertkorrektor (63), der eingerichtet ist, um einen Sollwert für Umgebungsinformationen zu korrigieren, die bei der Umgebungssteuerung der zugehörigen Einrichtung verwendet werden;

einen Steuerungsausführer (64), der eingerichtet ist, um die zugehörige Einrichtung basierend auf dem Sollwert zu steuern, der durch den Sollwertkorrektor (63) korrigiert wird, wobei die Steuereinrichtung (4) **dadurch gekennzeichnet ist, dass** der korrigierte Sollwert auf einer Differenz zwischen Umgebungsinformationen, die durch die durch den Zugehörige-Einrichtung-Ermittler (62) identifizierte zugehörige Einrichtung erfasst werden, und Umgebungsinformationen, die durch die Sensoren des tragbaren Endgeräts erfasst werden, basiert, und ferner **dadurch gekennzeichnet ist, dass** die Steuereinrichtung ferner umfasst:

einen Speicher (50), der eingerichtet ist, um Bilddaten für einen Grundriss des Wohnbereichs, Installationsstandortinformationen für jede der Klimaanlagen (2) in den Bilddaten und Installationsstandortinformationen für jeden der drahtlosen Adapter (3) in den Bilddaten zu speichern;

eine Anzeigeeinrichtung (20), die eingerichtet ist, um ein Bild des Grundrisses basierend auf den Bilddaten anzuzeigen; und

eine Eingabeeinrichtung (30), die eingerichtet ist, um die Installationsstandortinformationen für jede der Klimaanlagen (2) und die Installationsstandortinformationen für jeden der drahtlosen Adapter (3) auf Grundlage einer Betriebseingabe einzugeben; wobei

der Tragbares-Endgerät-Standortberechner (61) ferner eingerichtet ist, um den Standort des tragbaren Endgeräts (6) im Wohnbereich zu einem Standort in den Bilddaten zu konvertieren; und

der Zugehörige-Einrichtung-Ermittler (62) eingerichtet ist, um ferner die zugehörige Einrichtung auf Grundlage des Standorts des tragbaren Endgeräts (6), der zu dem Standort in den Bilddaten konvertiert wird, zu ermitteln.

2. Steuereinrichtung (4) nach Anspruch 1, wobei
der Zugehörige-Einrichtung-Ermittler (62) eingerichtet ist, um eine zum tragbaren Endgerät (6) nächstliegende Klimaanlage (2) als die zugehörige Einrichtung zu ermitteln.

3. Steuereinrichtung (4) nach Anspruch 1, wobei

der Zugehörige-Einrichtung-Ermittler (62) eingerichtet ist, um die Klimaanlage in einem bestimmten Bereich um das tragbare Endgerät (6) als die zugehörige Einrichtung zu ermitteln; und

der Sollwertkorrektor (63) eingerichtet ist, um einen Korrekturumfang des Sollwertes der Umgebungsinformationen der zugehörigen Einrichtung zu reduzieren, wenn eine Entfernung zwischen dem tragbaren Endgerät (6) und der zugehörigen Einrichtung länger wird.

4. Steuereinrichtung (4) nach Anspruch 2 oder 3, wobei

auf einen Grundriss des Wohnbereichs bezogene Informationen Standortinformationen von Wänden enthalten, die den Wohnbereich teilen; und

der Zugehörige-Einrichtung-Ermittler (62) eingerichtet ist, um auf Grundlage der Standortinformationen der Wände die zugehörige Einrichtung aus den Klimaanlagen (2) zu ermitteln, die nicht durch die Wände vom tragbaren Endgerät (6) getrennt sind.

5. Steuereinrichtung (4) nach einem der Ansprüche 1 bis 4, wobei

der Speicher (50) eingerichtet ist, um eine Korrelationstabelle zu speichern, die eine Korrelation zwischen den Umgebungsinformationen in Bezug auf die Klimatisierung und Anzeigefarben speichert, und

die Steuereinrichtung (4) ferner eine Steuerung (60) umfasst, die eingerichtet ist, um sich auf die Korrelationstabelle zu beziehen, um eine Anzeigefarbe zu erhalten, die den Umgebungsinformationen entspricht, die von den Sensoren erfasst und von jedem der drahtlosen Adapter (3) erhalten werden, und die Anzeigefarbe auf der Anzeigeeinrichtung (20) an dem Standort des tragbaren Endgeräts (6) innerhalb des Bildes auf Grundlage der durch den Tragbares-Endgerät-Standortberechner (61) berechneten Bilddaten überlagert und anzeigt.

6. Steuereinrichtung (4) nach einem der Ansprüche 1 bis 5, wobei

die Umgebungsinformationen in Bezug auf die Klimatisierung mindestens eine Lufttemperatur und/oder eine Feuchtigkeit und/oder eine Kohlenstoffdioxiddichte umfassen.

7. Steuereinrichtung (4) nach einem der Ansprüche 1 bis 6, wobei, wenn die Sensoren für einen bestimmten Zeitraum stationär bleiben, der Sollwertkorrektor (63) beginnt, den Sollwert zu korrigieren.

8. Klimaanlagensystem, umfassend:

die Steuereinrichtung (4) nach einem der Ansprüche 1 bis 7;
ein tragbares Endgerät (6), umfassend Sensoren zum Erfassen von Umgebungsinformationen in Bezug auf die Klimatisierung; und
eine Vielzahl von drahtlosen Adaptern (3), die an verschiedenen Standorten im Wohnbereich installiert sind, um eine Entfernung zum tragbaren Endgerät (6) und von den Sensoren erfasste Umgebungsinformationen durch drahtlose Kommunikation mit dem tragbaren Endgerät (6) zu erwerben.

9. Verfahren zum Steuern einer Vielzahl von Klimaanlagen (2), die an verschiedenen Standorten in einem bestimmten Wohnbereich installiert sind, wobei das Verfahren umfasst:

einen Tragbares-Endgerät-Standortberechnungsschritt des Berechnens, durch Durchführen von drahtloser Kommunikation mit einem tragbaren Endgerät (6), das getragen werden kann und Sensoren umfasst, die Umgebungsinformationen in Bezug auf Klimatisierung erfassen, des Standorts des tragbaren Endgeräts (6) in dem Wohnbereich auf Grundlage von: Entfernungen zum tragbaren Endgerät (6), die von jedem aus einer Vielzahl von drahtlosen Adaptern (3) erworben werden, die an verschiedenen Standorten im Wohnbereich installiert sind; und Installationsstandortinformationen für jeden der drahtlosen Adapter (3);
einen Zugehörige-Einrichtung-Ermittlungsschritt des Ermittelns, auf Grundlage des Standorts des tragbaren Endgeräts (6), der im Tragbares-Endgerät-Standortberechnungsschritt berechnet wird, und Installationsstandortinformationen jeder der Klimaanlagen (2) aus einer Vielzahl von Klimaanlagen (2), einer zugehörigen Einrichtung, die eine Umgebung um das tragbare Endgerät (6) herum beeinflusst;
einen Sollwertkorrekturschritt des Korrigierens, auf Grundlage einer Differenz zwischen Umgebungsinformationen, die durch die in der Zugehörige-Einrichtung-Ermittlungsverarbeitung ermittelte zugehörige Einrichtung erfasst werden, und den Umgebungsinformationen, die durch Sensoren erfasst werden, eines Sollwerts der Umgebungsinformationen, die in der Umgebungssteuerung durch die zugehörige Einrichtung verwendet werden;
einen Steuerungsausführungsschritt des Steuerns, auf Grundlage des in der Sollwertkorrekturverarbeitung korrigierten Sollwertes, der zugehörigen Einrichtung; und
wobei das Verfahren ferner umfasst: Speichern von Bilddaten für einen Grundriss des Wohnbereichs, Installationsstandortinformationen für jede der Klimaanlagen in den Bilddaten und Installationsstandortinformationen für jeden der drahtlosen Adapter in den Bilddaten;
Anzeigen eines Bildes des Grundrisses auf Grundlage der Bilddaten; und
Eingeben der Installationsstandortinformationen für jede der Klimaanlagen und der Installationsstandortinformationen für jeden der drahtlosen Adapter auf Grundlage einer Betriebseingabe; wobei
der Tragbares-Endgerät-Standortberechnungsschritt ferner das Konvertieren des Standorts des tragbaren Endgeräts im Wohnbereich zu einem Standort in den Bilddaten umfasst; und
der Zugehörige-Einrichtung-Ermittlungsschritt ferner das Ermitteln der zugehörigen Einrichtung auf Grundlage des Standorts des tragbaren Endgeräts, der zu dem Standort in den Bilddaten konvertiert wird, umfasst.

10. Programm zum Veranlassen eines Computers, der eine Vielzahl von Klimaanlagen (2) steuert, die an verschiedenen Standorten in einem bestimmten Wohnbereich installiert sind, das Verfahren nach Anspruch 9 zu implementieren.

**Revendications**

1. Dispositif de commande (4) qui commande une pluralité de dispositifs de climatisation (2) qui sont installés à différents emplacements dans un espace de vie spécifié, comprenant :

un calculateur d'emplacement de terminal portable (61), configuré de manière à calculer un emplacement d'un terminal portable (6) à l'intérieur de l'espace de vie, sur la base : de distances jusqu'au terminal portable (6) qui sont acquises par le biais de communications sans fil avec le terminal portable (6) par chaque adaptateur d'une pluralité d'adaptateurs sans fil (3) qui sont installés à différents emplacements dans l'espace de vie ; et d'informations d'emplacement d'installation pour chacun des adaptateurs sans fil (3), le terminal portable (6) incluant des détecteurs destinés à détecter des informations environnementales connexes à la climatisation ;

un identificateur de dispositif connexe (62), configuré de manière à, sur la base de l'emplacement du terminal portable (6) qui est calculé par le calculateur d'emplacement de terminal portable (61), et des informations d'emplacement d'installation pour chacun des dispositifs de climatisation (2), identifier, parmi la pluralité de dispositifs de climatisation (2), un dispositif connexe qui a une influence sur un environnement entourant le terminal portable (6) ;

un correcteur de valeur cible (63), configuré de manière à corriger une valeur cible pour des informations environnementales qui sont utilisées dans la commande d'environnement du dispositif connexe ;

un exécuteur de commande (64), configuré de manière à commander le dispositif connexe sur la base de la valeur cible qui est corrigée par le correcteur de valeur cible (63) ;

le dispositif de commande (4) étant **caractérisé en ce que** la valeur cible corrigée est basée sur une différence entre des informations environnementales détectées par le dispositif connexe identifié par l'identificateur de dispositif connexe (62) et des informations environnementales qui sont détectées par les capteurs du terminal portable ; et **caractérisé en outre en ce que** le dispositif de commande comprend :

une mémoire (50), configurée de manière à stocker des données d'image pour un plan d'étage de l'espace de vie, des informations d'emplacement d'installation pour chacun des dispositifs de climatisation (2) dans les données d'image, et des informations d'emplacement d'installation pour chacun des adaptateurs sans fil (3) dans les données d'image ;

un dispositif d'affichage (20), configuré de manière à afficher une image du plan d'étage sur la base des données d'image ; et

un dispositif d'entrée (30), configuré de manière à entrer les informations d'emplacement d'installation pour chacun des dispositifs de climatisation (2) et les informations d'emplacement d'installation pour chacun des adaptateurs sans fil (3) sur la base d'une entrée d'opération ; dans lequel

le calculateur d'emplacement de terminal portable (61) est en outre configuré de manière à convertir l'emplacement du terminal portable (6) dans l'espace de vie en un emplacement dans les données d'image ; et

l'identificateur de dispositif connexe (62) est configuré de manière à identifier en outre le dispositif connexe sur la base de l'emplacement du terminal portable (6) qui est converti en l'emplacement dans les données d'image.

2. Dispositif de commande (4) selon la revendication 1, dans lequel :
l'identificateur de dispositif connexe (62) est configuré de manière à identifier un dispositif de climatisation (2) le plus proche du terminal portable (6), en tant que le dispositif connexe.

3. Dispositif de commande (4) selon la revendication 1, dans lequel :

l'identificateur de dispositif connexe (62) est configuré de manière à identifier le dispositif de climatisation dans une plage spécifiée à partir du terminal portable (6), en tant que le dispositif connexe ; et
le correcteur de valeur cible (63) est configuré de manière à réduire une quantité de correction de la valeur cible des informations environnementales du dispositif connexe lorsqu'une distance augmente entre le terminal portable (6) et le dispositif connexe.

4. Dispositif de commande (4) selon la revendication 2 ou 3, dans lequel :

des informations connexes à un plan d'étage de l'espace de vie incluent des informations d'emplacement de murs qui divisent l'espace de vie ; et
l'identificateur de dispositif connexe (62) est configuré de manière à, sur la base des informations d'emplacement des murs, identifier le dispositif connexe parmi des dispositifs de climatisation (2) qui ne sont pas séparés du terminal portable (6) par les murs.

5. Dispositif de commande (4) selon l'une quelconque des revendications 1 à 4, dans lequel :

la mémoire (50) est configurée de manière à stocker une table de corrélation qui stocke une corrélation entre les informations environnementales connexes à la climatisation et des couleurs d'affichage ; et
le dispositif de commande (4) comprend en outre un contrôleur (60) configuré de manière à faire référence à la table de corrélation en vue d'obtenir une couleur d'affichage qui correspond aux informations environnementales qui sont détectées par les capteurs et qui sont obtenues à partir de chacun des adaptateurs sans fil (3), et il superpose et affiche la couleur d'affichage sur le dispositif d'affichage (20) au niveau de l'emplacement du terminal portable (6) dans l'image basée sur les données d'image, lequel est calculé par le calculateur d'emplacement de terminal portable (61).

6.  Dispositif de commande (4) selon l'une quelconque des revendications 1 à 5, dans lequel :
les informations environnementales connexes à la climatisation incluent au moins l'une des informations parmi la température de l'air, l'humidité et la teneur en dioxyde de carbone.

7.  Dispositif de commande (4) selon l'une quelconque des revendications 1 à 6, dans lequel, lorsque les capteurs restent stationnaires pendant une période donnée, le correcteur de valeur cible (63) commence à corriger la valeur cible.

8.  Système de climatisation comprenant :

le dispositif de commande (4) selon l'une quelconque des revendications 1 à 7 ;
un terminal portable (6) incluant des capteurs destinés à détecter des informations environnementales connexes à la climatisation ; et
une pluralité d'adaptateurs sans fil (3) installés à différents emplacements dans l'espace de vie de manière à acquérir une distance jusqu'au terminal portable (6) et des informations environnementales détectées par les capteurs par le biais de communications sans fil avec le terminal portable (6).

9.  Procédé de commande d'une pluralité de dispositifs de climatisation (2) qui sont installés à différents emplacements dans un espace de vie spécifié, le procédé comprenant :

une étape de calcul d'emplacement de terminal portable consistant à, en mettant en œuvre une communication sans fil avec un terminal portable (6) qui peut être transporté, et qui inclut des capteurs qui détectent des informations environnementales connexes à la climatisation, calculer l'emplacement du terminal portable (6) dans l'espace de vie, sur la base : de distances jusqu'au terminal portable (6) qui sont acquises par chaque adaptateur d'une pluralité d'adaptateurs sans fil (3) qui sont installés à différents emplacements dans l'espace de vie ; et d'informations d'emplacement d'installation pour chacun des adaptateurs sans fil (3) ;
une étape d'identification de dispositif connexe consistant à, sur la base de l'emplacement du terminal portable (6) qui est calculé à l'étape de calcul d'emplacement de terminal portable, et des informations d'emplacement d'installation de chacun des dispositifs de climatisation (2), identifier, parmi une pluralité des dispositifs de climatisation (2), un dispositif connexe qui influence un environnement entourant le terminal portable (6) ;
une étape de correction de valeur cible consistant à, sur la base d'une différence entre des informations environnementales qui sont détectées par le dispositif connexe qui est identifié dans le cadre du traitement d'identification de dispositif connexe, et les informations environnementales qui sont détectées par les capteurs, corriger une valeur cible des informations environnementales qui sont utilisées dans le cadre de la commande d'environnement par le dispositif connexe ;
une étape d'exécution de commande consistant à, sur la base de la valeur cible qui est corrigée dans le cadre du traitement de correction de valeur cible, commander le dispositif connexe ; et
le procédé comprenant en outre les étapes ci-dessous consistant à :

stocker des données d'image pour un plan d'étage de l'espace de vie, des informations d'emplacement d'installation pour chacun des dispositifs de climatisation dans les données d'image, et des informations d'emplacement d'installation pour chacun des adaptateurs sans fil dans les données d'image ;
afficher une image du plan d'étage sur la base des données d'image ; et
entrer les informations d'emplacement d'installation pour chacun des dispositifs de climatisation et les informations d'emplacement d'installation pour chacun des adaptateurs sans fil, sur la base d'une entrée d'opération ; dans lequel
l'étape de calcul d'emplacement de terminal portable comprend en outre l'étape consistant à convertir l'emplacement du terminal portable dans l'espace de vie en un emplacement dans les données d'image ; et
l'étape d'identification de dispositif connexe consiste en outre à identifier le dispositif connexe sur la base de l'emplacement du terminal portable qui est converti en l'emplacement dans les données d'image.

10. Programme destiné à amener un ordinateur, lequel commande une pluralité de dispositifs de climatisation (2) qui sont installés à différents emplacements dans un espace de vie spécifié, à mettre en oeuvre le procédé selon la revendication 9.

# FIG.1

# FIG.2

```
                                              ~ 4
  ┌─────────────────────────────────────────────────────┐
  │                          20                          │
  │          ┌──────────────────┐                        │
  │          │  DISPLAY DEVICE   │    ~ 30               │
  │          └──────────────────┘  ┌──────────────────┐  │
  │   60                           │   INPUT DEVICE   │  │
  │   ┌──────────────────────────┐ └──────────────────┘  │
  │   │       CONTROLLER          │      ~ 40            │
  │ 61│ ┌──────────────────────┐  │ ┌──────────────────┐ │
  │ ──┼─│  SENSOR TERMINAL     │  │ │  COMMUNICATION   │ ├── ~ 7
  │   │ │ LOCATION CALCULATOR  │  │ │     MANAGER      │ │
  │ 62│ ├──────────────────────┤  │ └──────────────────┘ │
  │ ──┼─│ RELATED AIR-CONDITIONING│                      │
  │   │ │  DEVICE IDENTIFIER    │  │                      │
  │ 63│ ├──────────────────────┤  │                      │
  │ ──┼─│  CORRECTED SET        │  │                      │
  │   │ │TEMPERATURE CALCULATOR │  │                      │
  │ 64│ ├──────────────────────┤  │                      │
  │ ──┼─│  SET TEMPERATURE      │  │                      │
  │   │ │ CONTROL EXECUTOR      │  │                      │
  │   │ └──────────────────────┘  │                      │
  │   └──────────────────────────┘                      │
  │   ┌──────────────────────────────────────────────┐  │
  │   │ 51            DATA MANAGER          ~ 52       │  │
  │   │ ┌──────────────────┐ ┌──────────────────┐     │  │
  │   │ │ AIR-CONDITIONING │ │ SENSOR TERMINAL  │     │  │
  │   │ │   DEVICE DATA    │ │      DATA        │     │  │
  │ 71│ │ ┌──────────────┐ │ │ ┌──────────────┐ │  81 │  │
  │ ──┼─┼─│ CONNECTION   │ │ │ │SENSOR LOCATION│ ├──  │  │
  │   │ │ │ INFORMATION  │ │ │ │ INFORMATION  │ │     │  │
  │ 72│ │ ├──────────────┤ │ │ ├──────────────┤ │  82 │  │
  │ ──┼─┼─│OPERATING STATE│ │ │ │ SENSOR VALUE │ ├──  │  │
  │   │ │ │    DATA      │ │ │ └──────────────┘ │     │  │
  │ 73│ │ ├──────────────┤ │ │                  │     │  │
  │ ──┼─┼─│ INSTALLATION │ │ │                  │     │  │
  │   │ │ │ LOCATION DATA│ │ │                  │     │  │
  │   │ │ └──────────────┘ │ └──────────────────┘     │  │
  │ 53│ ┌──────────────────┐ ┌──────────────────┐  54 │  │
  │ ──┼─│   WIRELESS       │ │   FLOOR PLAN     ├──    │  │
  │   │ │  ADAPTER DATA    │ │      DATA        │     │  │
  │ 91│ │ ┌──────────────┐ │ │ ┌──────────────┐ │ 101 │  │
  │ ──┼─┼─│ CONNECTION   │ │ │ │    FLOOR     │ ├──    │  │
  │   │ │ │ INFORMATION  │ │ │ │ INFORMATION  │ │     │  │
  │ 92│ │ ├──────────────┤ │ │ ├──────────────┤ │ 102 │  │
  │ ──┼─┼─│ INSTALLATION │ │ │ │  FLOOR PLAN  │ ├──    │  │
  │   │ │ │ LOCATION DATA│ │ │ │    DATA      │ │     │  │
  │   │ │ └──────────────┘ │ │ └──────────────┘ │     │  │
  │   └──────────────────────────────────────────────┘  │
  └─────────────────────────────────────────────────────┘
                          ~ 50
```

# FIG.3

```
        ( INITIAL SETTING PROCESSING )
                      |
                      v           S1
    +--------------------------------------+
    |     REGISTRATION OF CONNECTION        |
    | INFORMATION AND VARIOUS SETTING DATA  |
    +--------------------------------------+
                      |
                      v           S2
    +--------------------------------------+
    |     REGISTRATION OF FLOOR PLAN DATA   |
    +--------------------------------------+
                      |
                      v           S3
    +--------------------------------------+
    | REGISTRATION OF INSTALLATION LOCATION |
    |   DATA FOR AIR-CONDITIONING DEVICE    |
    +--------------------------------------+
                      |
                      v           S4
    +--------------------------------------+
    | REGISTRATION OF INSTALLATION LOCATION |
    |     DATA FOR WIRELESS ADAPTER         |
    +--------------------------------------+
                      |
                      v
                  ( END )
```

# FIG.4

(400, 120) 2g
(200, 120)
(400, 120)
2a
2d
2b
(200, 240)
2e (400, 240)
2h (600, 240)
2c
(200, 360)
2f (400, 360)
2i (600, 360)
480 DOTS
800 DOTS

# FIG.5

3a (200, 100)
3b (600, 100)
3c (400, 400)

# FIG.6

```
┌─────────────────────────────────┐
│   SENSOR TERMINAL LOCATION      │
│    CALCULATION PROCESSING       │
└─────────────────────────────────┘
              │
              ▼                    ┌─S11
┌─────────────────────────────────────────┐
│   ACQUIRE DISTANCE BETWEEN EACH WIRELESS │
│      ADAPTER AND SENSOR TERMINAL         │
└─────────────────────────────────────────┘
              │
              ▼                    ┌─S12
┌─────────────────────────────────────────┐
│  FIND INTERSECTION POINTS OF CIRCLES THAT│
│   ARE CENTERED AT EACH WIRELESS ADAPTER  │
│  AND HAVE A RADIUS THAT IS DISTANCE BETWEEN│
│ EACH WIRELESS ADAPTER AND SENSOR TERMINAL│
└─────────────────────────────────────────┘
              │
              ▼                    ┌─S13
┌─────────────────────────────────────────┐
│   SET INTERSECTING POINTS OF ALL OF CIRCLES│
│     AS CURRENT LOCATION OF SENSOR TERMINAL│
└─────────────────────────────────────────┘
              │
              ▼
          ┌───────┐
          │  END  │
          └───────┘
```

# FIG.7

## FIG.8

## FIG.9

CORRECTED SET TEMPERATURE
CALCULATION PROCESSING

S31
ACQUIRE TEMPERATURE Ta DETECTED
BY RELATED AIR-CONDITIONING DEVICE

S32
ACQUIRE TEMPERTURE Tb DETECTED
BY SENSOR OF SENSOR TERMINAL

S33
CALCULATE CORRECTED SET TEMPERATURE
CORRECTED SET TEMPERATURE = Tset − (Tb − Ta)

S34
TRANSMIT CORRECTED SET TEMPERATURE TO
RELATED AIR-CONDITIONING DEVICE

END

# FIG.10

|  | AIR-CONDITIONING DEVICE 2e | SENSOR TERMINAL 6 |
|---|---|---|
| SET TEMPERATURE | 27.0 deg C(Tset) | — |
| ROOM TEMPERATURE | 27.2 deg C(Ta) | 29.4 deg C(Tb) |

# FIG.11

# FIG.12

# FIG.13

# FIG.14

AIR-CONDITIONING CONTROL DEVICE — 19

7

21

VENTILATION DEVICE — 17

VENTILATION DEVICE — 17

VENTILATION DEVICE — 17

REMOTE CONTROLLER — 18

REMOTE CONTROLLER — 18

REMOTE CONTROLLER — 18

16

WIRELESS ADAPTER — 3

WIRELESS ADAPTER — 3

WIRELESS ADAPTER — 3

10

SENSOR TERMINAL — 6

# FIG.15

**EP 2 669 589 B1**

## REFERENCES CITED IN THE DESCRIPTION

### Patent documents cited in the description

- JP 2006105487 A
- JP 2009014219 A